# EUROPEAN PATENT SPECIFICATION

(11) **EP 4 229 886 B1**
(45) Date of publication and mention of the grant of the patent: **05.03.2025**
(21) Application number: 20792363.2
(22) Date of filing: 13.10.2020
(51) Int. Cl.: H04W 8/08, H04W 8/10, H04W 88/14

(54) **MECHANISM FOR DIRECT EVENT EXPOSURE**
MECHANISMUS FÜR DIREKTE EREIGNISEXPOSITION
MÉCANISME POUR EXPOSITION DIRECTE D'ÉVÉNEMENT

(43) Date of publication of application: 23.08.2023
(73) Proprietor: Nokia Technologies Oy, 02610 Espoo (FI)
(72) Inventor: BELLING, Thomas, 85435 Erding (DE); LANDAIS, Bruno, 22560 Pleumeur-Bodou (FR); THIEBAUT, Laurent, 92160 Antony (FR); GODIN, Philippe, 78000 Versailles (FR); BULAKCI, Ömer, 80997 Munich (DE)
(74) Representative: Script Intellectual Property LLP
(86) International application number: PCT/EP2020/078727
(87) International publication number: WO 2022/078575

(56) References cited:
- "3rd Generation Partnership Project; Technical Specification Group Services and System Aspects; System architecture for the 5G System (5GS); Stage 2 (Release 16)", vol. SA WG2, no. V16.6.0, 24 September 2020 (2020-09-24), pages 1 - 447, XP051960892, Retrieved from the Internet <URL:ftp://ftp.3gpp.org/Specs/archive/23_series/23.501/23501-g60.zip 23501-g60.docx> [retrieved on 20200924]
- "3rd Generation Partnership Project; Technical Specification Group Services and System Aspects; Procedures for the 5G System (5GS); Stage 2 (Release 16)", vol. SA WG2, no. V16.6.0, 24 September 2020 (2020-09-24), pages 1 - 597, XP051960894, Retrieved from the Internet <URL:ftp://ftp.3gpp.org/Specs/archive/23_series/23.502/23502-g60.zip 23502-g60.docx> [retrieved on 20200924]
- ZTE: "KI#3, New Sol: RAN node information exposure in AMF", vol. SA WG2, no. Elbonia; 20201001, 13 August 2020 (2020-08-13), XP051919762, Retrieved from the Internet <URL:https://ftp.3gpp.org/tsg_sa/WG2_Arch/TSGS2_140e_Electronic/Docs/S2-2004835.zip S2-2004835_EC Solution for KI#3 RAN Information exposure in AMF.docx> [retrieved on 20200813]
- NOKIA ET AL: "KI 3: Update to Solution #42", vol. SA WG2, no. Elbonia; 20200819 - 20200901, 13 August 2020 (2020-08-13), XP051919771, Retrieved from the Internet <URL:https://ftp.3gpp.org/tsg_sa/WG2_Arch/TSGS2_140e_Electronic/Docs/S2-2004846.zip S2-2004846 EC KI3 sol42 upd v6.doc> [retrieved on 20200813]

## Description

### BACKGROUND

### Field

Examples of embodiments relate to apparatuses, methods, systems, computer programs, computer program products and (non-transitory) computer-readable media usable for controlling and conducting a direct event exposure by access network elements in a communication network, such as a wireless communication network based on 3GPP standards, and in particular to apparatuses, methods, systems, computer programs, computer program products and (non-transitory) computer-readable media usable for controlling and conducting a direct notification about events observed by access network elements towards the core network.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- 5GS: 5G system
- AF: application function
- AMF: access and mobility management function
- AN: access network
- AP: access point
- AUSF: authentication server function
- BS: base station
- CN: core network
- CPU: central processing unit
- DN: data network
- eNB: evolved node B
- ETSI: European Telecommunications Standards Institute
- gNB: next generation node B
- GPRS: general packet radio service
- HO: handover
- ID: identification
- LTE: Long Term Evolution
- LTE-A: LTE Advanced
- N3IWF: non 3GPP interworking function
- NB: node B
- NEF: network exposure function
- NF: network function
- NG: new generation
- NGAP: next generation application protocol
- NRF: network repository function
- NSSF: network slice
- NW: network, network side
- PCF: policy control function
- RAN: radio access network
- RAT: radio access technology
- SCP: service communication proxy
- SMF: session management function
- SUPI: subscription permanent identifier
- TAI: tracking area identifier
- UDM: unified data management
- UE: user equipment
- UMTS: universal mobile telecommunication system
- UPF: user plane function
- W-AGF: wireline access gateway function

"3rd Generation Partnership Project;Technical Specification Group Services and System Aspects; System architecture for the 5G System (5GS); Stage 2 (Release 16) ". 3GPP STANDARD; 3GPP TS 23.501. 3RD GENERATION PARTNERSHIP PROJECT (3GPP). MOBILE COMPETENCE CENTRE ; 650. ROUTE DES LUCIOLES ; F-06921 SOPHIA-ANTIPOLIS CEDEX; FRANCE• vol. SA WG2. no. V16.6.0 24 September 2020 (2020-09-24). Pages 1-447. XP051960892 describes in section 7.1 how network functions acting as service producers or consumers interact with each other. It sets out that a Control Plane NF A may also subscribe to NF Service offered by Control Plane NF B on behalf of Control Plane NF C, i.e. it requests the NF Service Producer to send the event notification to another consumer(s). In this case, NF A includes the notification endpoint, and a Notification Correlation ID, of the NF C in the subscription request.

"3rd Generation Partnership Project; Technical Specification Group Services and System Aspects; Procedures for the 5G System (5GS); Stage 2 (Release 16)". 3GPP STANDARD; 3GPP TS 23.502. 3RD GENERATION PARTNERSHIP PROJECT (3GPP). MOBILE COMPETENCE CENTRE ; 650. ROUTE DES LUCIOLES ; F-06921 SOPHIA ANTIPOLIS CEDEX; FRANCE• vol. SA WG2. no. V16.6.0 24 September 2020 (2020 09-24). Pages 1-597. XP051960894 details the contents of messages exchanged between different types of nodes relating to event exposure subscriptions.

ZTE: "KI#3. New Sol: RAN node information exposure in AMF". 3GPP DRAFT; S2-2004835. 3RD GENERATION PARTNERSHIP PROJECT (3GPP). MOBILE COMPETENCE CENTRE ; 650. ROUTE DES LUCIOLES ; F-06921 SOPHIA-ANTIPOLIS CEDEX; FRANCE• vol. SA WG2. no. Elbonia; 20201001 13 August 2020 (2020-08-13). XP051919762 describes an apparatus for use by an access management network control element or function, which is configured to receive and process an event exposure subscription for events related to the at least one communication element or function to determine the access network control element or function to which the communication element or function has established a communication connection, and to map an identification of the at least one communication element or function indicated in the event exposure subscription to a temporary identification of the at least one communication element or function used on an interface with the access network control element or function

NOKIA ET AL: "KI 3: Update to Solution #42". 3GPP DRAFT; S2-2004846. 3RD GENERATION PARTNERSHIP PROJECT (3GPP). MOBILE COMPETENCE CENTRE; 650. ROUTE DES LUCIOLES ; F-06921 SOPHIA-ANTIPOLIS CEDEX; FRANCE• vol. SA WG2. no. Elbonia; 20200819-20200901, 13 August 2020 (2020-08-13). XP051919771 relates to obtaining information from the NGRAN. It proposes two variants: the first uses a procedure similar to "MDT tracing", whereby a trace request is propagated via an AMF to an NG RAN. The trace request identifies the UE with the SUPI/GPSI. The second variant relies on an AMF informing the EC AF of the NG RAN ID, the EC providing this information to the local NEF and the local NEF itself sending a request to the RAN.

### SUMMARY

The invention is defined by the enclosed claims

### BRIEF DESCRIPTION OF THE DRAWINGS

Some arrangements are described below, by way of example only, with reference to the accompanying drawings, in which:
Fig. 1 shows a diagram illustrating an example of a reference point architecture of a communication network in which examples of embodiments are implementable;
Fig. 2 shows a diagram illustrating an example of a service based architecture of a communication network in which examples of embodiments are implementable;
Fig. 3 shows a signaling diagram explaining an example for direct notification procedure according to an arrangement ;
Fig. 4 shows a signaling diagram explaining an example for direct notification procedure according to an arrangement;
Fig. 5 shows a flow chart of a processing conducted in a core network control element or function according to some example arrangements;
Fig. 6 shows a flow chart of a processing conducted in an access network control element or function according to some example arrangements;
Fig. 7 shows a diagram of a network element or function representing part of a core network control element or function acting according to some example arrangements; and
Fig. 8 shows a diagram of a network element or function representing part of an access network control element or function acting according to some example arrangements.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

In the following, different exemplifying arrangements will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network.

The following examples are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or arrangement. Single features of different arrangements may also be combined to provide other arrangements. Furthermore, terms like "comprising" and "including" should be understood as not limiting the described arrangements to consist of only those features that have been mentioned; such examples and arrangements may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

It is to be noted that the above described architecture is just an example of a possible network deployment as for the invention. As an alternative, for example, the RAN may be replaced by any suitable access network element or function, such as a 5G Access Network like a W-AGF for Wireline access, N3IWF for untrusted Non 3GPP access etc.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Basically, for properly establishing and handling a communication between two or more endpoints (e.g. communication stations or elements, such as terminal devices, user equipments (UEs), or other communication network elements, a database, a server, host etc.), one or more network elements or functions (e.g. virtualized network functions), such as communication network control elements or functions, for example access network elements like access points, radio base stations, relay stations, eNBs, gNBs etc., and core network elements or functions, for example control nodes, support nodes, service nodes, gateways, user plane functions, access and mobility functions etc., may be involved, which may belong to one communication network system or different communication network systems.

Currently developed communication systems, such as the 5G system, are designed to support data connectivity and services which enable deployment of techniques such as Network Function Virtualization (NFV) and Software Defined Networking (SDN). These new techniques are required due to the various different profiles of data services that shall to be supported by the 5G system. Data connectivity allows to develop various use cases having completely variable requirements wherein network operator have to fulfill these requirements as efficiently as possible.

5G systems are developed with a flat architecture in which control plane (CP) functions are separated from the user plane (UP) in order to make them scaling independent. This allows operators to use this functional split for dimensioning, deploying and adapting the network to their needs easily. Another idea in 5G is to reduce dependencies between the access network (AN) and the core network (CN).

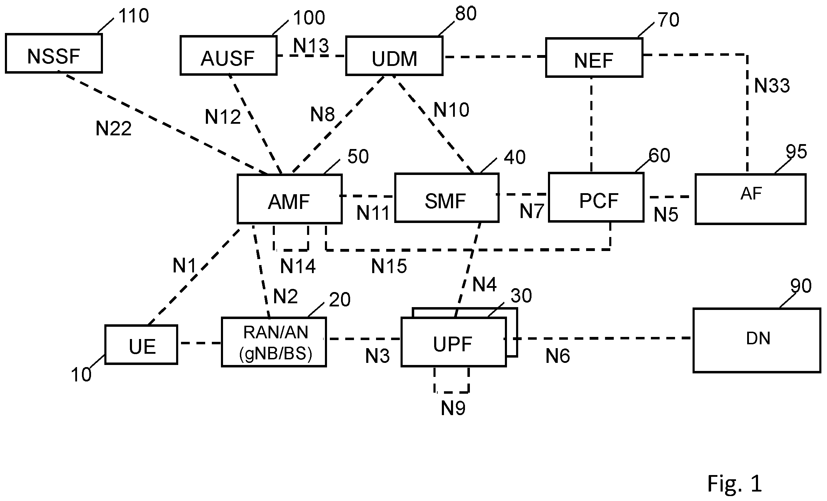

In order to illustrate interactions between the various network functions in the 5G systems, there are established the following two ways. The first one is a so-called reference point representation which describes the interactions between pairs of network functions defined by point-to-point reference point between any two network functions (reference points are indicated by N). This representation is illustrated in Fig. 1.

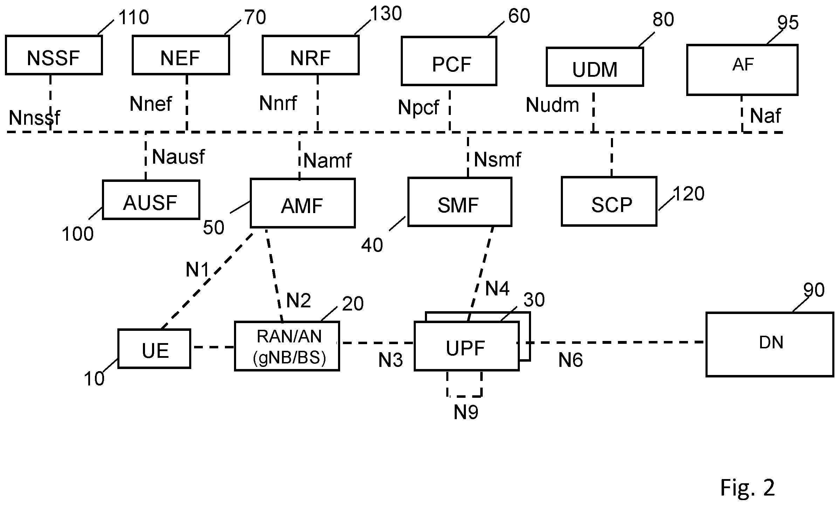

The second one is a so-called service-based representation in which one network function within the control plane allows other (authorized) network functions to access services. This representation is illustrated in Fig. 2.

It is to be noted that the elements and functions depicted in Fig. 1 and Fig. 2 are equivalent, wherein the respective way of connection between the elements or functions is different. That is, the service based architecture emphasizes the cloud-based nature making use of NFV and SDN techniques by using service-based actions between control plane functions.

As shown in Figs. 1 and 2, the 5G network comprises, amongst others, the following elements or functions.

A communication element such as a UE 10 is connected to a RAN or access network (AN) 20 and to an access and mobility function (AMF) 50.

The UE 10 is, for example, any device used directly by an end-user to communicate, such as a handheld phone, laptop etc.

The RAN 20 provides a radio technology that allows to access to the core network, and represents a base station (BS or NB) using a NR RAT and/or an evolved LTE base station, or a general base station including e.g. non-3GPP access, e.g., Wi-Fi or an access network termination such as a W-AGF for Wireline access, N3IWF for untrusted Non 3GPP access etc..

The core network architecture shown in Figs. 1 and 2 applied for a 5GS network comprises various NFs. As shown in Figs. 1 and 2, the CN NFs comprises (amongst others) the AMF 50, a session management function (SMF) 40, a policy control function (PCF) 60, a network exposure function (NEF) 70, a user data management (UDM) 80, one or more user plane function(s) (UPF) 30, an authentication server function (AUSF) 100, a network repository function (NRF, only in Fig. 2) 130, a service communication proxy (SCP, only in Fig. 2) 120, and a network slice selection function (NSSF) 110. Furthermore, as shown in Figs, 1 and 2, an application function (AF) 95 and a data network (DN) 90 are provided.

The AMF 50 is a function which oversees authentication, connection, mobility management between network and a device. It receives connection and session related information from the UE, provides UE-based authentication, authorization, mobility management, etc. A UE (e.g. UE 10) even using multiple access technologies can be basically connected to a single AMF because the AMF 50 is independent of the access technologies.

The SMF 40 is a function which sets up and manages sessions according to network policy. The SMF 40 is responsible, for example, for session management and allocates IP addresses to UEs. Furthermore, it selects and controls the UPF 30 for data transfer, and controls policy enforcement. It is to be noted that it is also possible that in case the UE 10 has e.g. multiple sessions (communication connections), different SMFs may be allocated to each session to manage them individually and possibly provide different functionalities per session.

The UPF 30 can be deployed in various configurations and locations, according to the service type. Functions of the UPF 30 are e.g. QoS handling for user plane, packet routing and forwarding, packet inspection and policy rule enforcement, traffic accounting and reporting.

The PCF 60 is a function which provides a policy framework incorporating network slicing, roaming and mobility management, similar to a policy and charging rules function in a 4G network. It governs the network behavior by supporting a unified policy framework, it accesses subscription information for policy decisions taken by the UDR.

The UDM 80 is a function which stores and provides subscription data of the UE 10, similar to an home subscriber server (HSS) in 4G networks, and also network slice specific information.

The NEF 70 is used for exposing network capabilities and events to an AF.

The AUSF 100 is a function which resides in in a home network and performs authentication with a UE.

The NRF 130 is a function which allows every network function to discover the services offered by other network functions. It serves as a repository of the services and supports discovery mechanisms that allows 5G elements to discover each other.

The SCP 120 is a decentralized element or function and is composed of control plane and data plane. The SCP 120 is deployed along side of 5G NF for providing routing control, resiliency, and observability to the core network.

The NSSF 110 is a function which selects a network slice instance based on information provided during an UE attach. The NSSF 110 redirects traffic to a network slice, wherein a set of AMF can be provided to a UE based on which slices the UE has access to.

The AF 95 supports application influence on traffic routing, accesses the NEF and interacts with policy framework for policy control.

The DN 90 is a data network providing e.g. operator services, Internet access or 3rd party services.

As shown in Fig. 1, the NFs are connected by means of so-called reference points (N1 to N33). This representation of reference points N1 to N33 is used for illustrating how data flows are developed. For example, N1 is defined to carry signaling between the UE 10 and the AMF 50. The reference point for connecting between the RAN/AN 20 and the AMF 50 is defined as N2, and the reference point between RAN/AN 20 and the UPF 30 is defined as N3. A reference point N11 is defined between the AMF 50 and the SMF 40 so that SMF 40 is controllable by the AMF 50. Reference point N4 is used by the SMF 40 and the UPF 30 so that the UPF 30 can be set using the control signal generated by the SMF 40, and the UPF 30 can report its state to the SMF 40. Reference point N9 is the reference point for the connection between different UPFs. Reference point N15 and N7 are defined for connecting the PCF 60 to the AMF 50 and the SMF 40, respectively, so that the PCF 60 can apply policy to the AMF 50 and the SMF40, respectively. Reference points N8 and N10 are defined because the subscription data of the UE 10 is required for the AMF 50 and the SMF 40, respectively. Reference point N12 is for connecting between the AMF 50 and the AUSF 100. Reference point N14 is for connecting between the two AMF 50. Reference point N13 is for connecting between the UDM 80 and the AUSF 100. Reference point N5 is defined for connecting between the AF 95 and the PCF 60, and reference point N6 is defined for connecting between the UPF 30 and the AF 90. Reference point N22 is for connecting between the AMF 50 and the NSSF 110. Reference point N33 is for connecting between the NEF 70 and the AF 95.

On the other hand, as shown in Fig. 2, respective core network elements or functions are connected with service based interfaces to each other, i.e. Nnssf, Nnef, Nnrf, Npcf, Nudm, Naf, Nausf, Namf, Nsmf.

In the 5GC architecture, as described above, the AMF 50 is located between the 5GC and the RAN. Towards the 5GC, as shown in Fig. 2, it exhibits granular service based HTTP based interfaces and can also use services offered by other core network functions. However, towards the RAN, the AMF 50 relies on traditional non-service based interfaces.

Usually, all communication between RAN and 5GC needs to traverse the AMF 50. The AMF 50 shields mobility of the UE 10 and related handovers between RAN nodes from the 5GC. For security reasons, the AMF 50 also hides permanent UE identifier (i.e. SUPI) used in the 5GC from RAN nodes. Instead, the AMF 50 assigns a temporary and changeable identification, such as a so called AMF UE NGAP ID, for the purpose of identifying a UE in communication with RAN nodes. The AMF 50 also sets up or releases N2 associations with RAN nodes when the UE transitions from CM-IDLE to CM-CONNECTED and vice versa.

There is defined an event exposure service offered by the AMF. Generally, an event exposure service allows consumer NFs to subscribe and unsubscribe for events in the network concerning a specific part thereof, e.g. the UE or the link between UE and network. In the event exposure service, the consumer NFs with a corresponding subscription are notified about observed events. "Notify" means that related event(s) is/are reported to the NF service consumer which has subscribed to the event report service. "Subscribe" means the service operation which is used by an NF service consumer to subscribe for event notifications. "Unsubscribe" means a service operation used by an NF service consumer to unsubscribe from event notifications.

For example, when subscribing to event exposure service, the NF consumer(s) provide one or more of the following information:
- one or more event ID(s) identifying the type of event being subscribed to (e.g. PDU Session Release, UE mobility out of an Area of Interest, etc.);
- event filter information allowing to meet a condition for notifying the subscribed event ID, e.g. an "Area of interest" and a list of tracking areas;
- a target of event reporting, such as a specific UE, a group of UEs or any UE (i.e. all UEs);
- a notification target address and a notification correlation ID, which allow the event receiving NF to correlate notifications received from an event provider with this subscription; that is, a subscription is usually associated with an unique notification target address and notification correlation ID associated with related event ID(s);
- an expiry time representing a time until which the subscription is desired to be kept active.

In known event exposure services offered by the AMF, the AMF generates all related notifications, even if the related events are observed by RAN nodes and the AMF obtains related notifications from RAN nodes.

For example, the AMF provides mobility related events to NF consumers that have subscribed for the events, e.g. during registration procedure, handover procedure, service request procedure. Service consumers are e.g. the NEF, the UDM and the like.

However, exposure services offered by the AMF lead to a high load of the AMF for managing and providing the notification, in particular for frequently occurring events such as cell changes of a UE.

Therefore, according to examples of embodiments, a mechanism allowing to control and conduct a direct event exposure by access network elements or functions in a communication network, such as a wireless communication network based on 3GPP standards, towards the core network is suggested. A corresponding mechanism allows to introduce the benefits of a service based architecture also within the RAN and between RAN and 5GC.

In particular, such a mechanism for allowing direct event exposure from the access network to service consuming NFs on the core network is useful, for example, for direct notifications about events observed by RAN nodes towards 5GC NFs, for instance related to events like location changes of the UE (which concerns TAl, cell ID), a case where a UE is moving in or out of a subscribed "Area Of Interest", or a situation where a communication connection of a UE is established or released (e.g. when a transition between IDLE and CONNECTED state of the UE occurs) or a UE loss of communication occurs.

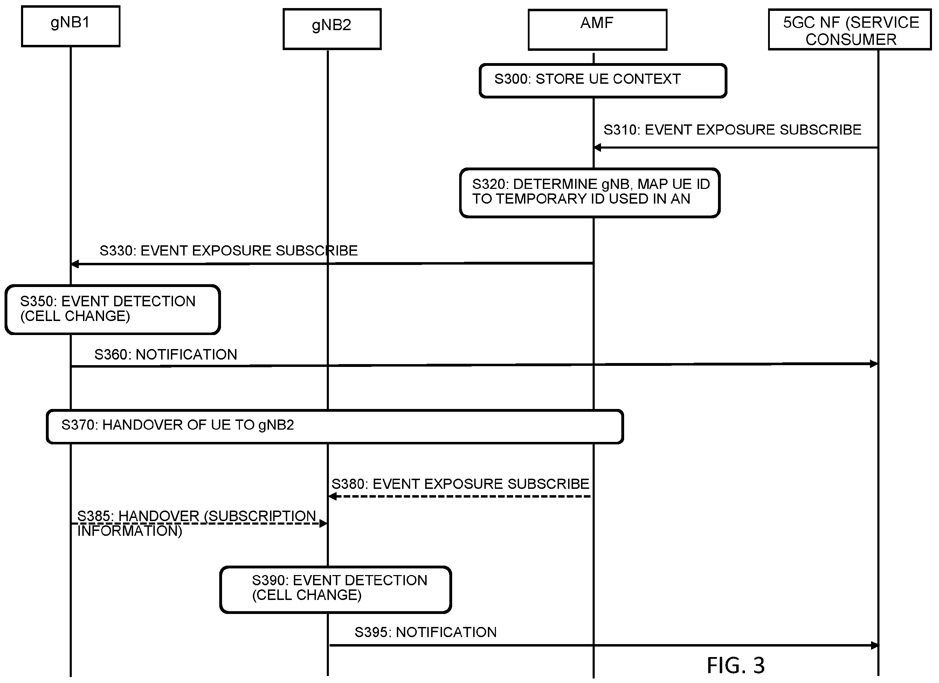

Fig. 3 shows a signaling diagram explaining an example for direct notification procedure according to an examplearrangement.

In S300, the AMF 50 stores UE context information of UEs connected to the network, e.g. of UE 10 in Figs. 1 and 2.

In S310, the AMF 50 receives a subscription for events related with a UE. Specifically, the AMF receives, for example, a Namf_ExposureEventSubscribe indication from a NF in the 5GC being a service consumer, e.g. from the SMF 40, the NEF 70 or the like. The indication received in S310 includes, for example, information about the SUPI of UE 10 as indication of the target of event reporting, an event ID, such as a cell change event, a notification target address and a notification correlation ID.

In the present example, it is assumed that the access network elements or functions, such as a gNB, are able to directly observe the event. According to other examples, the AMF 50 conducts a check regarding the event ID, for example, in order to ensure that the further process is conducted only when the access (e.g. RAN) nodes are able to observe the event(s) in question.

In S320, the AMF 50 determines the access network node (e.g. gNB1) which is connected to the UE 10 (determined by means of the SUPI). It is to be noted that in the present example gNB1 as part of the RAN is taken as an example for the access network element or function, but it is evident that the process applies to any kind of access node or function.

In connection with the determination of the access node to which the UE in question is connected, the AMF 50 conducts also a mapping of the UE ID (i.e. the target of event reporting) to a temporary ID of the UE which is used on the interface with the access network. For example, in the example illustrated in Fig. 3, the AMF 50 maps the SUPI indicating the UE 10 in the received subscription (in S310) towards UE temporary identifier(s) used on the interface with the AN, for instance the AMF UE NGAP ID.

In S330, the AMF 50 forwards a modified event exposure subscription towards the access (e.g. RAN) node (i.e. gNB1) serving the UE 10.The modified event exposure subscription comprises e.g. a gNB_EventExposure_Subscribe indication which includes, for example, information about the AMF UE NGAP ID of UE 10 as indication of the target of event reporting, the event ID, such as a cell change event, the notification target address and the notification correlation ID (the latter three parts from the indication in S310).

It is to be noted that in case a group of UEs is indicated as the target of event reporting, the AMF 50 subscribes separately for each UE at the corresponding access node serving that UE, wherein in each case a modified event exposure subscription including the respective UE's AMF UE NGAP ID is sent.

It is to be noted that according to examples, the AMF 50 caches the subscription(s).

When observing a subscribed event for a served UE in S350, the RAN node (e.g. gNB1) sends the related event notifications directly towards the notification target address and provides the notification correlation ID together with an indication of the event type (e.g. cell change), in S360.

It is to be noted that "directly sending" the notification means, in accordance with some examples, for example, that the notification is sent to the notification target address (i.e. the NF service consumer) by using direct communication (i.e. without any intermediate entity) or indirect communication (i.e. via a service communication proxy, for example).

It is to be noted that the cell change may imply a change of cell which is intra-gNB-CU or inter-gNB cell change. In case of the inter-gNB cell change, i.e. handover, the AMF 50 is informed, for example, via a path switch request. In case of the intra-gNB-CU mobility, a new notification may be generated based on the event exposure subscription.

According to examples, when mobility to a new RAN node is determined, e.g. a handover in S370 from gNB1 to gNB2, and/or an assignment of a new
AMF UE NGAP ID to the UE is detected, the new access network node can be informed about event exposure subscriptions in different ways.

According to one example, the AMF 50 subscribes at the new RAN node (gNB2) by sending, in S380, a corresponding gNB_EventExposure_Subscribe indication which includes, for example, information about the AMF UE NGAP ID of UE 10 as indication of the target of event reporting, the event ID, such as a cell change event, the notification target address and the notification correlation ID (the latter three parts from the indication in S310). A new modified event exposure subscription may also be sent with the new AMF UE NGAP ID, if present.

In another example, upon mobility to the new RAN node gNB2, the former RAN node gNB1 passes information about the event subscription towards the new RAN node gNB2. For example, the information is provided as of the UE context transfer. Specifically, as shown in S385, in connection with handover related information, information about the subscription including the AMF UE NGAP ID of UE 10 as indication of the target of event reporting, the event ID, such as a cell change event, the notification target address and the notification correlation ID is provided.

Then, when in S390 the new RAN node gNB2 observes a subscribed event for the served UE 10, the new RAN node gNB2 sends the related event notifications directly towards the notification target address and provides the notification correlation ID together with an indication of the event type (e.g. cell change), in S395.

It is to be noted that in case a switch or handover of the UE 10 to a new AMF occurs, the subscription information (e.g. as cached by the AMF 50) is provided by the former AMF to the new AMF. Then, the new AMF can subscribe at the RAN nodes, such as in S330 or S380.

Furthermore, according to examples, it is to be noted that in case there is no specified interface between the access nodes, such as an Xn interface between the gNB1 and gNB2, connection switch related messages and procedures, such as NG-based HO messages and procedures, can be used for the transfer of the event subscription.

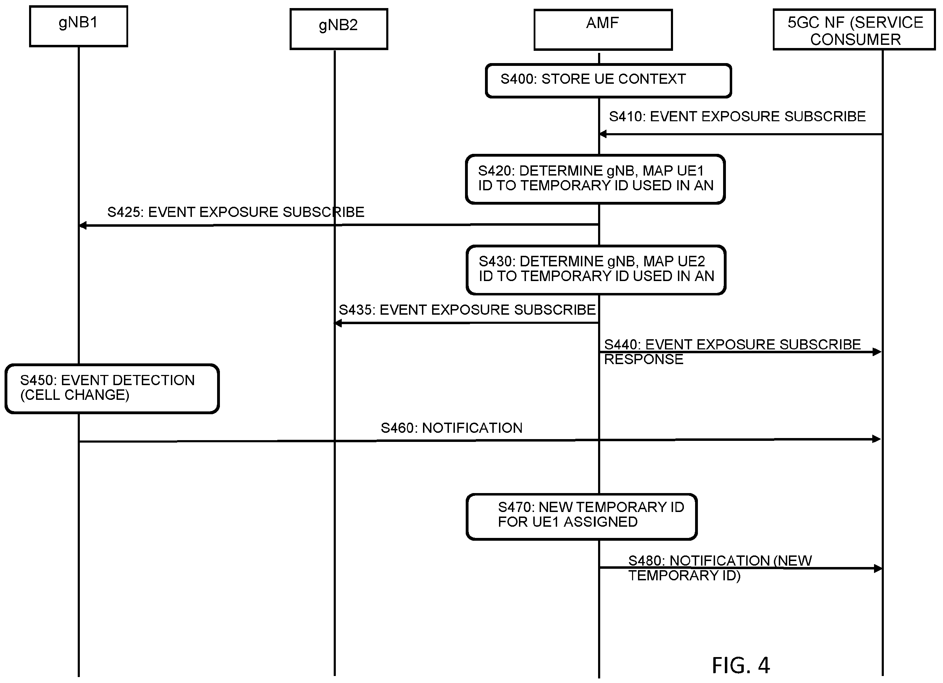

Fig. 4 shows a signaling diagram explaining an example for direct notification procedure according to an example. Specifically, Fig. 4 is related to a case where one or more 5GC NF service consumers subscribe for event exposure for several UEs or any UE (all UEs).

In S400, the AMF 50 stores UE context information of UEs connected to the network. It is to be noted that even though only one UE (UE 10) is depicted in Figs. 1 and 2, in the following examples, it is assumed that a plurality of UEs is connected to the communication network, wherein the connection can be established by one or more access nodes (e.g. gNB1, gNB2).

In S410, the AMF 50 receives a subscription for events related with a plurality (or all) of the UEs. Specifically, the AMF receives, for example, a Namf_ExposureEventSubscribe indication from a NF in the 5GC being a service consumer, e.g. from the SMF 40, the NEF 70 or the like. The indication received in S410 includes, for example, information about the SUPI of each UE (e.g. SUPI1, SUPI2) or of the group of users as indication of the target of event reporting, an event ID, such as a cell change event, a notification target address and a notification correlation ID.

Again, in the present example, it is assumed that the access network elements or functions, such as the gNBs, are able to directly observe the event. According to other examples, the AMF 50 conducts a check regarding the event ID, for example, in order to ensure that the further process is conducted only when the access (e.g. RAN) nodes are able to observe the event(s) in question.

The AMF then uses a separate subscription towards the gNB for each UE.

That is, in S420 and S430, the AMF 50 determines the access network nodes (e.g. gNB1 in S420 and gNB2 in S430) which are connected to the UEs in question (determined by means of the respective SUPI1, SUPI2). It is to be noted that in the present example gNB1 and gNB2 as part of the RAN is taken as an example for the access network elements or functions, but it is evident that the process applies to any kind of access node or function.

In connection with the determination of the access nodes to which the UEs in question are connected, the AMF 50 conducts also a mapping of the UE IDs (i.e. the targets of event reporting) to the temporary IDs of the UEs which are used on the interface with the access network. For example, in the example illustrated in Fig. 4, the AMF 50 maps the SUPI1 and the SUPI2 indicating a corresponding UE in the received subscription (in S410) towards UE temporary identifiers used in the AN, for instance the AMF UE NGAP ID1 (in S420) and AMF UE NGAP ID2 (in S430).

In S425 and S435, the AMF 50 forwards a respective modified event exposure subscription towards the access (e.g. RAN) nodes (i.e. gNB1 in S425 and gNB2 in S435) serving the UEs in question. The modified event exposure subscriptions comprise e.g. a gNB_EventExposure_Subscribe indication which includes, for example, information about the AMF UE NGAP ID1 (or AMF UE NGAP ID2) of the UE in question, as indication of the target of event reporting, the event ID, such as a cell change event, the notification target address and the notification correlation ID (the latter three parts from the indication in S410).

In S440, the AMF informs the 5GC NF service consumer for each SUPI about the UE temporary identifier(s) used in the AN for that SUPI. That is, in S440, a response message to the event exposure subscription in S410 is sent by the AMF 50 to the 5GC NF service consumer, which includes a mapping result of e.g. SUPI1 to AMF UE NGAP ID1 and SUPI2 to AMF UE NGAP ID2.

When observing a subscribed event for a served UE in S450, the RAN node (e.g. gNB1) sends the related event notifications directly towards the notification target address and provides the notification correlation ID together with an indication of the event type (e.g. cell change), in S460. In the present example, the notification from the gNB towards the 5GC NF service consumer contains also the UE temporary identifier(s) used in the AN, e.g. the AMF UE NGAP ID1 in the present example.

As indicated above, the AMF 50 may include information about the UE temporary identifier(s) used in the AN for the SUPI(s) in the response to the Namf_EventExposure request. According to further examples, the AMF 50 can also send separate notifications about UE temporary identifier(s) used in the AN for SUPI(s) towards the 5GC NF service consumer. In a similar manner, the separate notification is also usable, for example, when a new UE temporary identifier(s) used in the AN is/are assigned to SUPI(s). For example, as shown in Fig. 4, in case it is determined in S470 that for a new temporary ID (e.g. AMF UE NGAP ID1_2) is assigned for one UE (e.g. UE1 assigned to SUPI1), the AMF sends in S480 a separate notification to the 5GC NF service consumer. In this separate notification in S480, an indication about an event (here UE ID change) is provided, together with the notification correlation ID and a mapping result of SUPI1 to AMF UE NGAP ID1_2.

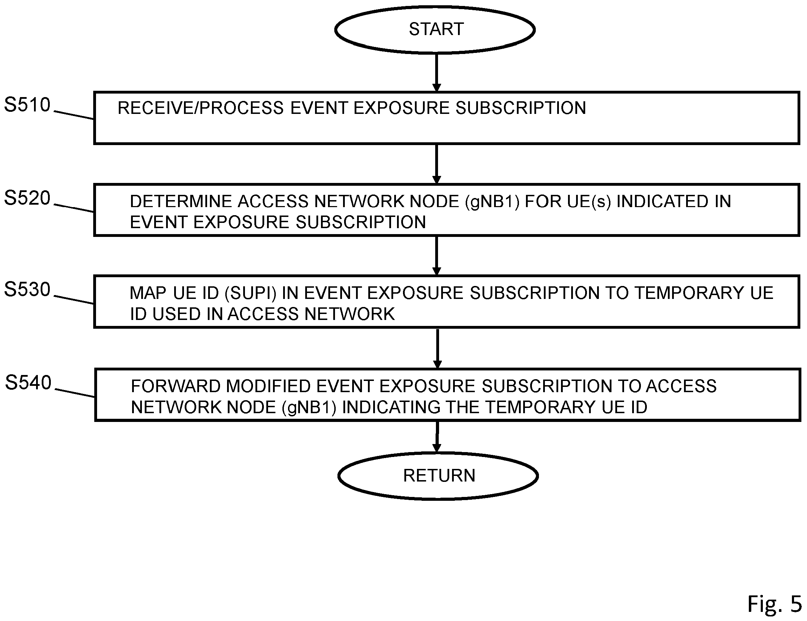

Fig. 5 shows a flow chart of a processing executed by a core network control element or function, such as AMF 50 of Fig. 1, as described in the examples of Figs. 3 and 4. That is, Fig. 5 shows a flowchart related to a processing conducted by a core network control element or function, such as the AMF 50, which acts as an access management network control element or function configured to control a communication of a communication element or function in a communication network via at least one access network control element or function. As also indicated above, the communication network may be based on a 3GPP standard. However, also other communication standards can be used, according to other examples of embodiments.

In S510, an event exposure subscription for events related to the communication element or function (i.e. UE 10, for example) is received from a network function being a service consumer, such as another core network element or function, e.g. the SMF 40, the NEF 70 or the like. This event exposure subscription is then further processed.

For example, the events concerned by the event exposure subscription comprise e.g. a location change of the UE in the communication network, which is accompanied e.g. by TAI or cell ID change. Another event is e.g. caused by a situation where the UE enters or leaves a predetermined area of interest defined in the communication network. Moreover, another event being concerned is e.g. a situation where the communication loss for the UE in question is detected, or a communication connection of the UE is established or released (e.g. transition between IDLE and CONNECTED state). Other events are also conceivable, and the above indicated examples are not intended to limit the kind of events being concerned.

In S520, it is determined to which access network control element or function (i.e. gNB1 or 2 in the example of Figs. 3 and 4) the UE being concerned by the event exposure subscription has established a communication connection. This can be done, for example, by checking corresponding entries in a memory storing corresponding information.

In S530 , an identification of the UE indicated in the event exposure subscription, such as the SUPI, is mapped to a temporary identification of the UE which used on the interface with the access network. This temporary ID is e.g. the AMF UE NGAP ID indicated above.

In S540, a modified event exposure subscription for events related to the UE is sent to the (one or more) access network control element or function (e.g. gNB 1) being determined for the UE to be connected to. The modified event exposure subscription indicates, besides information contained in the event exposure subscription received in S510, the temporary identification of the UE used on the interface with the access network control element or function.

It is to be noted that according to some examples, before sending the modified event exposure subscription to the access network node, it is determined whether the access network control element or function is able, i.e. configured to observe the events related to the at least one communication element or function. In other words, a pre-check is conducted as to whether a direct notification be the gNB is possible, i.e. whether the event can be actually grasped by the gNB, for example. Only in case this determination is affirmative, the modified event exposure subscription is forwarded to the at access network control element or function.

Furthermore, according to some examples, the event exposure subscription and the modified event exposure subscription comprise a notification target address information related to a service consumer network element or function having initiated the event exposure subscription, and a notification correlation identification allocated to the event exposure subscription. This information is required by the service consumer network element or function for allocating the notification correctly.

It is to be noted that the event exposure subscription can be also related to a plurality of UEs, for example. In this case, according to examples, for each of the plurality of UEs, the corresponding access network control element or function to which
the respective UE has established a communication connection is determined. Then, similar to the process as described above for S530, each identification of the plurality of UEs indicated in the event exposure subscription (e.g. a corresponding SUPI) is mapped to the corresponding temporary identification of the UEs used on the interface with the access network control element or function (i.e., for example, AMF UE NGAP ID1, AMF UE NGAP ID2, etc.). Then, to each of the determined access network control elements or function, a separate modified event exposure subscription for events related to the communication element or function being connected therewith is forwarded, including the temporary ID being of relevance (i.e. of the connected UE(s)). The plurality of UEs may include also all UEs being connected.

According to examples, when a plurality of UEs is involved in the event exposure subscription procedure, information indicating the corresponding temporary identification of the plurality of UEs used on the interface with the access network control element or function is forward to the service consumer network element or function having initiated the event exposure subscription. This temporary ID is mapped to each identification of the plurality of UEs (e.g. the SUPI) indicated in the event exposure subscription. According to examples of embodiments, this information is provided in a response message to a message including the (original) event exposure subscription, or in a separate message to the service consumer network element or function.

According to further examples, when it is determined that any UE involved in the event exposure subscription has changed the communication connection to a new access network control element or function (e.g. a HO from gNB 1 to gNB 2), the modified event exposure subscription for events related to the UE in question is sent (again) to the new access network control element or function.

Moreover, according to examples, when it is determined that the UE has assigned a new temporary identification used on the interface with the access network control element or function (e.g. a new AMF UE NGAP ID), a new modified event exposure subscription for events related to the UE is sent to the access network control element or function being connected thereto. In this case, the new modified event exposure subscription indicates the new temporary identification. In this context, according to examples, also the service consumer network element or function having initiated the event exposure subscription is provided with corresponding
information indicating the new temporary identification of the UE, which is mapped to the identification of the UE indicated in the event exposure subscription and having assigned the new temporary identification.

According to further examples, information about event exposure subscriptions are cached. Then, it is possible, for example, when it is determined that a change to a new access management network control element or function for controlling the communication of the UE takes place, it is possible to provide the information about the event exposure subscriptions to the new access management network control element or function for subscription to the at least one access network control element or function. That is, the new access management network control element or function is enabled to directly subscribe with the access network for direct event exposure without the necessity that the service consumer has to repeat the event exposure subscription with the new access management network control element or function.

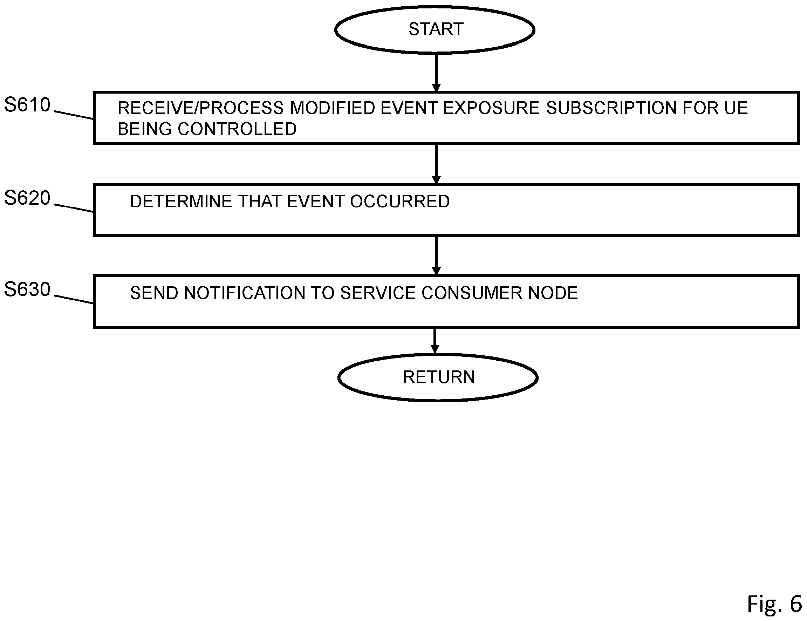

Fig. 6 shows a flow chart of a processing executed by an access network control element or function, such as gNB 20 of Fig. 1, as described in the examples of Figs. 3 and 4. That is, Fig. 6 shows a flowchart related to a processing conducted by an access network control element or function, such as the gNB 20, which conducts a communication with a communication element or function (i.e. at least one UE, for example) in a communication network. As also indicated above, the communication network may be based on a 3GPP standard. However, also other communication standards can be used, according to other examples.

In S610, a modified event exposure subscription for events related to the UE is received and processed. The modified event exposure subscription, which corresponds to that being sent in S540 of Fig. 5, for example, indicates, besides other information, the temporary identification of the UE used on the interface with the access network control element or function, such as the AMF UE NGAP ID.

As also indicated above, the events concerned by the modified event exposure subscription comprise e.g. a location change of the UE in the communication network, which is accompanied e.g. by TAI or cell ID change. Another event is e.g. caused by a situation where the UE enters or leaves a predetermined area of interest defined in the communication network. Moreover, another event being concerned is e.g. a situation where a communication connection of the UE is established or released (IDLE and CONNECTED state transition) or the communication loss for the UE in question is detected. Other events are also conceivable, and the above indicated examples are not intended to limit the kind of events being concerned.

According to examples, the modified event exposure subscription comprises a notification target address information related to a service consumer network element or function having initiated the event exposure subscription, and a notification correlation identification allocated to the event exposure subscription.

In S620, it is determined whether any of the events identified in the modified event exposure subscription occurs. This is executed, for example, by known measurements or monitoring of the signaling with the UE, or the like.

In case the determination in S620 is affirmative, in S630, a notification indicating that the corresponding event identified in the modified event exposure subscription occurs is sent directly to the service consumer network element or function having initiated the event exposure subscription. This service consumer network element or function is different to the access management network control element or function from which the modified event exposure subscription has been received. That is, direct notification of another network element or function is achieved.

According to examples, the notification is sent to the service consumer network element or function according to the notification target address information indicated in the modified event exposure subscription. Furthermore, the notification includes an indication of the event being determined and the notification correlation identification allocated to the event exposure subscription.

Moreover, in the notification, information is included which indicates the temporary identification of the UE used on the interface with the access network control element or function, i.e. the AMF UE NGAP ID. This is for example of relevance when a plurality of UEs is monitored for events.

In addition, according to examples, when it is determined that the UE has changed the communication connection to a new access network control element or
function (e.g. in case of a HO from gNB 1 to gNB 2), information derived from the modified event exposure subscription can be sent to the new access network control element or function (i.e. from gNB 1 to gNB 2, for example).

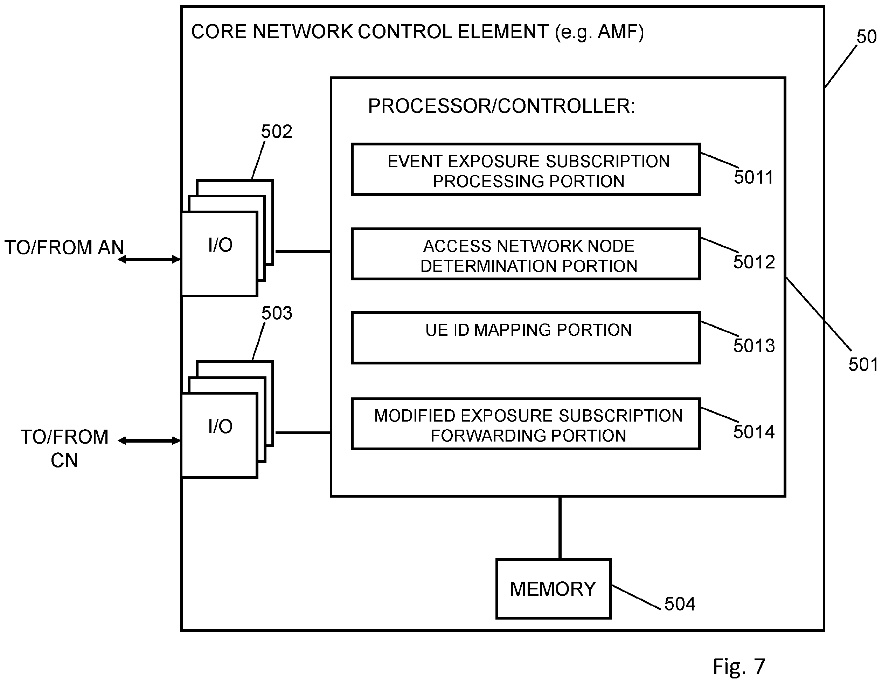

Fig. 7 shows a diagram of a network element or function representing a core network control element or function, such as AMF 50, according to some examples, as described in connection with Figs. 1 to 4, which is configured to conduct a procedure for controlling a direct event exposure by access network elements in a communication network according to examples of embodiments of the disclosure. It is to be noted that the network element or function, like the AMF, may include further
elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The core network control element or function 50 shown in Fig. 7 may include a processing circuitry, a processing function, a control unit or a processor 501, such as a CPU or the like, which is suitable for executing instructions given by programs or the like related to the control procedure. The processor 501 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 502 and 503 denote input/output (I/O) units or functions (interfaces) connected to the processor or processing function 501. The I/O units 502 may be used for communicating with a access networks, such as gNBs 1 and 2 of Figs. 3 and 4. The I/O units 503 may be used for communicating with core network parts of the communication network. The I/O units 502 and 503 may be combined units including communication equipment towards several entities, or may include a distributed structure with a plurality of different interfaces for different entities. Reference sign 504 denotes a memory usable, for example, for storing data and programs to be executed by the processor or processing function 501 and/or as a working storage of the processor or processing function 501. It is to be noted that the memory 504 may be implemented by using one or more memory portions of the same or different type of memory.

The processor or processing function 5201 is configured to execute processing related to the above described control processing. In particular, the processor or processing circuitry or function 501 includes at least one or more of the following sub-portions. Sub-portion 5011 is a processing portion which is usable as a portion for receiving and processing an event exposure subscription from a core network element or function. The portion 5011 may be configured to perform processing according to S510 of Fig. 5.

Furthermore, the processor or processing circuitry or function 501 may include a sub-portion 5012 usable as a portion for determining an access network node. The portion 5012 may be configured to perform a processing according to S520 of Fig. 5. Moreover, the processor or processing circuitry or function 501 may include a sub-portion 5013 usable as a portion for mapping IDs. The portion 5013 may be configured to perform a processing according to S530 of Fig. 5. In addition, the processor or processing circuitry or function 501 may include a sub-portion 5014 usable as a portion for forwarding a modified exposure subscription. The portion 5014 may be configured to perform a processing according to S540 of Fig. 5.

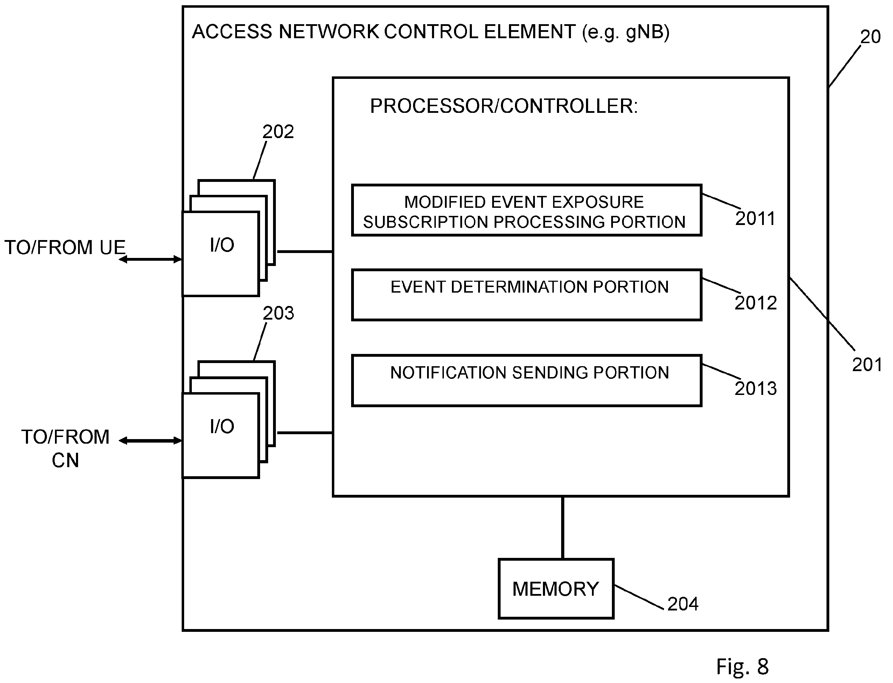

Fig. 8 shows a diagram of an access network control element or function, such as gNB1 20, according to some examples, as described in connection with Figs. 1 to 4, which is configured to conduct a procedure for controlling and conducting a direct event exposure in a communication network according to examples of embodiments of the disclosure. It is to be noted that the network element or function, like the gNB, may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The access network control element or function 20 shown in Fig. 8 may include a processing circuitry, a processing function, a control unit or a processor 201, such as a CPU or the like, which is suitable for executing instructions given by programs or the like related to the control procedure. The processor 201 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 202 and 203 denote input/output (I/O) units or functions (interfaces) connected to the processor or processing function 201. The I/O units 202 may be used for communicating with a communication element such as a UE. The I/O units 203 may be used for communicating with the communication network, such as CN elements or functions, or other access network elements or functions. The I/O units 202 and 203 may be combined units including communication equipment towards several entities, or may include a distributed structure with a plurality of different interfaces for different entities. Reference sign 204 denotes a memory usable, for example, for storing data and programs to be executed by the processor or processing function 201 and/or as a working storage of the processor or processing function 201. It is to be noted that the memory 204 may be implemented by using one or more memory portions of the same or different type of memory.

The processor or processing function 201 is configured to execute processing related to the above described control processing. In particular, the processor or processing circuitry or function 201 includes one or more of the following sub-portions. Sub-portion 2011 is a processing portion which is usable as a portion for receiving and processing a (modified) event exposure subscription. The portion 2011 may be configured to perform processing according to S610 of Fig. 6. Furthermore, the processor or processing circuitry or function 201 may include a sub-portion 2012 usable as a portion for determining an event. The portion 2012 may be configured to perform a processing according to S620 of Fig. 6. In addition, the processor or processing circuitry or function 201 may include a sub-portion 2013 usable as a portion for sending a notification. The portion 2013 may be configured to perform a processing according to S630 of Fig. 6.

As described above, by means of the measures discussed in the examples, it is possible to introduce the benefits of a service based architecture also within the access network, i.e. to provide direct notification also from RAN to the core network (e.g. the 5G CN). In particular, it is possible to enable direct notifications about events observed by RAN nodes towards 5G CN NFs, for instance related to events such as location changes (TAI, Cell ID), a UE moving in or out of a subscribed "Area Of Interest", connection establishment or release, or UE loss of communication. By means of this, it is possible to reduce the notification load e.g. at the AMF, in particular for very frequently occurring cell change events.

It is to be noted that examples of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of the disclosure based on the principles defined.

## Claims

1. A method for use in an access and mobility function entity (50) controlling a communication of at least one user equipment (10) in a communication network via at least one base station, the method comprising
receiving (S310) and processing an event exposure subscription for events related to the at least one user equipment, wherein the event exposure subscription indicates a subscription permanent identifier of the at least one user equipment,
determining (S320) the base station (20) to which the user equipment (10) determined by means of the subscription permanent identifier in the event exposure subscription has established a communication connection,
in connection with determining the base station to which the at least one user equipment in question has established a communication connection,
mapping the subscription permanent identifier of the at least one user equipment indicated in the event exposure subscription to a temporary identification of the at least one user equipment used on an interface with the base station (20), and
forwarding (S330) a modified event exposure subscription for events related to the at least one user equipment (10) to the at least one base station being determined for the at least one user equipment, wherein the modified event exposure subscription indicates the temporary identification of the at least one user equipment used on the interface with the base station (20) and wherein the event exposure subscription and the modified event exposure subscription comprise an event identification and a notification target address information related to a service consumer network element or function having initiated the event exposure subscription, and a notification correlation identification allocated to the event exposure subscription.

2. The method according to claim 1, further comprising:
determining whether the at least one base station (20) is configured to observe the events related to the at least one user equipment (10), and
forwarding the modified event exposure subscription to the at least one base station in case the determination is affirmative.

3. The method according to claim 1 or 2, wherein the events related to the at least one user equipment (10) concern at least one of
a location change of the at least one user equipment (10) in the communication network,
a situation where the at least one user equipment enters or leaves a predetermined area of interest defined in the communication network, and
a situation where the communication connection with the at least one user equipment is established, lost or released.

4. The method according to any of claims 1 to 3, further comprising
in case the event exposure subscription is related to a plurality of user equipment (10),
determining (S420, S430) for each of the plurality of user equipment (10) the corresponding base station (20) to which each of the plurality of user equipment (10) has established a communication connection,
mapping each subscription permanent identifier of the plurality of user equipment (10) indicated in the event exposure subscription to a corresponding temporary identification of the plurality of user equipment (10) used on the interface with the base station, and
forwarding (S425, S435), to each of the determined base station a separate modified event exposure subscription for events related to the user equipment (10) being connected therewith.

5. The method according to claim 4, further comprising
forwarding, to a service consumer network element or function having initiated the event exposure subscription, information indicating the corresponding temporary identification of the plurality of user equipment (10) used on the interface with the base station (20) , which is mapped to each subscription permanent identifier of the plurality of user equipment (10) indicated in the event exposure subscription, wherein the information is provided in a response message to a message including the event exposure subscription or in a separate message to the service consumer network element or function.

6. The method according to any of claims 1 to 5, further comprising
when it is determined that the at least one user equipment (10) has changed the communication connection to a new base station, sending the modified event exposure subscription for events related to the at least one user equipment (10) to the new base station.

7. The method according to any of claims 1 to 5, further comprising
when it is determined that the at least one user equipment (10) has assigned a new temporary identification used on the interface with the base station, sending a new modified event exposure subscription for events related to the at least one user equipment (10) to the at least one base station, wherein the new modified event exposure subscription indicates the new temporary identification.

8. The method according to claim 7, further comprising
forwarding, to a service consumer network element or function having initiated the event exposure subscription, information indicating the new temporary identification used on the interface with the a least one user equipment (10), which is mapped to the subscription permanent identifier of the at least one user equipment (10) indicated in the event exposure subscription and having assigned the new temporary identification.

9. A method for use in a base station (20) configured to conduct a communication with at least one user equipment (10) in a communication network, the method comprising
receiving, from an access and mobility function entity (50), and processing a modified event exposure subscription for events related to the at least one user equipment (10) , wherein the modified event exposure subscription comprises an event identification, and indicates a temporary identification of the at least one user equipment used on an interface with the base station and wherein the modified event exposure subscription comprises a notification target address information related to the service consumer network element or function having initiated the event exposure subscription, and a notification correlation identification allocated to the event exposure subscription,
determining whether at least one of events identified in the modified event exposure subscription occurs, and in case the determination is affirmative,
sending a notification, indicating that at least one of the events identified in the modified event exposure subscription occurred, directly to a service consumer network element or function having initiated an event exposure subscription, which is different to the base station.

10. The method according to claim 9, wherein the events related to the at least one user equipment concern at least one of
a location change of the at least one user equipment in the communication network,
a situation where the at least one user equipment enters or leaves a predetermined area of interest defined in the communication network, and
a situation where the communication connection with the at least one user equipment is established, lost or released.

11. The method according to claim 10, further comprising
sending the notification to the service consumer network element or function according to the notification target address information indicated in the modified event exposure subscription and
including, in the notification, an indication of the event being determined and the notification correlation identification allocated to the event exposure subscription.

12. An access and mobility function entity (50) comprising means for performing the method of any of claims 1 to 8.

13. A computer program product for an access and mobility function entity (50), including software code portions for performing the steps of any of claims 1 to 8, when said product is run on the access and mobility function entity (50).

14. A base station (20) comprising means for performing the method of claim 9.

15. A computer program product for a base station (20), including software code portions for performing the steps of claim 9, when said product is run on the base station.

## Patentansprüche

1. Verfahren zur Verwendung in einer Zugangs- und Mobilitätsfunktionsentität (50), die eine Kommunikation von mindestens einer Teilnehmereinrichtung (10) in einem Kommunikationsnetzwerk via mindestens eine Basisstation steuert, wobei das Verfahren Folgendes umfasst
Empfangen (S310) und Verarbeiten einer Ereignisexpositionssubskription für Ereignisse, die sich auf die mindestens eine Teilnehmereinrichtung beziehen, wobei die Ereignisexpositionssubskription eine permanente Subskriptionskennung der mindestens einen Teilnehmereinrichtung anzeigt,
Bestimmen (S320) der Basisstation (20), zu der die Teilnehmereinrichtung (10), die mittels der permanenten Subskriptionskennung in der Ereignisexpositionssubskription bestimmt wird, eine Kommunikationsverbindung aufgebaut hat,
in Verbindung mit dem Bestimmen der Basisstation, zu der die betreffende mindestens eine Teilnehmereinrichtung eine Kommunikationsverbindung aufgebaut hat,
Zuordnen der permanenten Subskriptionskennung der mindestens einen Teilnehmereinrichtung, die in der Ereignisexpositionssubskription angezeigt wird, zu einer temporären Identifikation der mindestens einen Teilnehmereinrichtung, die auf einer Schnittstelle mit der Basisstation (20) verwendet wird, und
Weiterleiten (S330) einer modifizierten Ereignisexpositionssubskription für Ereignisse, die sich auf die mindestens eine Teilnehmereinrichtung (10) beziehen, zu der mindestens einen Basisstation, die für die mindestens eine Teilnehmereinrichtung bestimmt wird, wobei die modifizierte Ereignisexpositionssubskription die temporäre Identifikation der mindestens einen Teilnehmereinrichtung, die auf der Schnittstelle mit der Basisstation (20) verwendet wird, anzeigt und wobei die Ereignisexpositionssubskription und die modifizierte Ereignisexpositionssubskription eine Ereignisidentifikation und Benachrichtigungszieladressinformationen zu einem Dienstverbrauchernetzwerkelement oder einer Dienstverbrauchernetzwerkfunktion, von dem bzw. der die Ereignisexpositionssubskription initiiert wurde, sowie eine Benachrichtigungskorrelationsidentifikation, die der Ereignisexpositionssubskription zugeteilt ist, umfassen.

2. Verfahren nach Anspruch 1, das ferner Folgendes umfasst:
Bestimmen, ob die mindestens eine Basisstation (20) dazu ausgelegt ist, die Ereignisse, die sich auf die mindestens eine Teilnehmereinrichtung (10) beziehen, zu beobachten, und
Weiterleiten der modifizierten Ereignisexpositionssubskription zu der mindestens einen Basisstation im Fall einer positiven Bestimmung.

3. Verfahren nach Anspruch 1 oder 2, wobei die Ereignisse, die sich auf die mindestens eine Teilnehmereinrichtung (10) beziehen, mindestens eines von Folgendem betreffen
einer Standortänderung der mindestens einen Teilnehmereinrichtung (10) im Kommunikationsnetzwerk,
einer Situation, in der die mindestens eine Teilnehmereinrichtung ein vorbestimmtes Gebiet von Interesse, das im Kommunikationsnetzwerk definiert ist, betritt oder verlässt, und
einer Situation, in der die Kommunikationsverbindung mit der mindestens einen Teilnehmereinrichtung aufgebaut wird, verlorengeht oder abgebaut wird.

4. Verfahren nach einem der Ansprüche 1 bis 3, das ferner Folgendes umfasst
in einem Fall, in dem sich die Ereignisexpositionssubskription auf eine Vielzahl von Teilnehmereinrichtungen (10) bezieht,
Bestimmen (S420, S430) für jede der Vielzahl von Teilnehmereinrichtungen (10) der entsprechenden Basisstation (20), zu der jede der Vielzahl von Teilnehmereinrichtungen (10) eine Kommunikationsverbindung aufgebaut hat,
Zuordnen von jeder permanenten Subskriptionskennung der Vielzahl von Teilnehmereinrichtungen (10), die in der Ereignisexpositionssubskription angezeigt sind, zu einer entsprechenden temporären Identifikation der Vielzahl von Teilnehmereinrichtungen (10), die auf der Schnittstelle mit der Basisstation verwendet werden, und
Weiterleiten (S425, S435) einer separaten modifizierten Ereignisexpositionssubskription für Ereignisse, die sich auf die Teilnehmereinrichtung (10) beziehen, zu jeder der bestimmten Basisstationen, mit der sie verbunden ist.

5. Verfahren nach Anspruch 4, das ferner Folgendes umfasst
Weiterleiten von Informationen, die die entsprechende temporäre Identifikation der Vielzahl von Teilnehmereinrichtungen (10), die auf der Schnittstelle mit der Basisstation (20) verwendet werden, anzeigen, die jeder permanenten Subskriptionskennung der Vielzahl von Teilnehmereinrichtungen (10) zugeordnet ist, die in der Ereignisexpositionssubskription angezeigt werden, zu einem Dienstverbrauchernetzwerkelement oder einer Dienstverbrauchernetzwerkfunktion, wobei die Informationen in einer Antwortnachricht auf eine Nachricht, die die Ereignisexpositionssubskription beinhaltet, oder in einer separaten Nachricht an das Dienstverbrauchernetzwerkelement oder die Dienstverbrauchernetzwerkfunktion bereitgestellt werden.

6. Verfahren nach einem der Ansprüche 1 bis 5, das ferner Folgendes umfasst
wenn bestimmt wird, dass die mindestens eine Teilnehmereinrichtung (10) die Kommunikationsverbindung zu einer neuen Basisstation geändert hat, Senden der modifizierten Ereignisexpositionssubskription für Ereignisse, die sich auf die mindestens eine Teilnehmereinrichtung (10) beziehen, an die neue Basisstation.

7. Verfahren nach einem der Ansprüche 1 bis 5, das ferner Folgendes umfasst
wenn bestimmt wird, dass die mindestens eine Teilnehmereinrichtung (10) eine neue temporäre Identifikation zugewiesen hat, die auf der Schnittstelle mit der Basisstation verwendet wird, Senden einer neuen modifizierten Ereignisexpositionssubskription für Ereignisse, die sich auf die mindestens eine Teilnehmereinrichtung (10) beziehen, an die mindestens eine Basisstation, wobei die neue modifizierte Ereignisexpositionssubskription die neue temporäre Identifikation anzeigt.

8. Verfahren nach Anspruch 7, das ferner Folgendes umfasst
Weiterleiten von Informationen, die die neue temporäre Identifikation anzeigen, die auf der Schnittstelle mit der mindestens einen Teilnehmereinrichtung (10) verwendet wird, die der permanenten Subskriptionskennung der mindestens einen Teilnehmereinrichtung (10) zugeordnet ist, die in der Ereignisexpositionssubskription angezeigt wird und die neue temporäre Identifikation zugewiesen hat, zu einem Dienstverbrauchernetzwerkelement oder einer Dienstverbrauchernetzwerkfunktion.

9. Verfahren zur Verwendung in einer Basisstation (20), die dazu ausgelegt ist, eine Kommunikation mit mindestens einer Teilnehmereinrichtung (10) in einem Kommunikationsnetzwerk vorzunehmen, wobei das Verfahren Folgendes umfasst
Empfangen und Verarbeiten einer modifizierten Ereignisexpositionssubskription für Ereignisse, die sich auf die mindestens eine Teilnehmereinrichtung (10) beziehen, von einer Zugangs- und Mobilitätsfunktionsentität (50), wobei die modifizierte Ereignisexpositionssubskription eine Ereignisidentifikation umfasst und eine temporäre Identifikation der mindestens einen Teilnehmereinrichtung anzeigt, die auf einer Schnittstelle mit der Basisstation verwendet wird, und wobei die modifizierte Ereignisexpositionssubskription Benachrichtigungszieladressinformationen, die sich auf das Dienstverbrauchernetzwerkelement oder die Dienstverbrauchernetzwerkfunktion beziehen, das bzw. die die Ereignisexpositionssubskription initiiert hat, sowie eine Benachrichtigungskorrelationsidentifikation, die der Ereignisexpositionssubskription zugeteilt ist, umfasst,
Bestimmen, ob mindestens eines von Ereignissen eintritt, die in der modifizierten Ereignisexpositionssubskription identifiziert sind, und im Fall einer positiven Bestimmung,
direktes Senden einer Benachrichtigung, die anzeigt, dass mindestens eines der Ereignisse eingetreten ist, die in der modifizierten Ereignisexpositionssubskription identifiziert sind, an ein Dienstverbrauchernetzwerkelement oder eine Dienstverbrauchernetzwerkfunktion, das bzw. die eine Ereignisexpositionssubskription initiiert hat, die sich von der Basisstation unterscheidet.

10. Verfahren nach Anspruch 9, wobei die Ereignisse, die sich auf die mindestens eine Teilnehmereinrichtung beziehen, mindestens eines von Folgendem betreffen
einer Standortänderung der mindestens einen Teilnehmereinrichtung im Kommunikationsnetzwerk,
einer Situation, in der die mindestens eine Teilnehmereinrichtung ein vorbestimmtes Gebiet von Interesse, das im Kommunikationsnetzwerk definiert ist, betritt oder verlässt, und
einer Situation, in der die Kommunikationsverbindung mit der mindestens einen Teilnehmereinrichtung aufgebaut wird, verlorengeht oder abgebaut wird.

11. Verfahren nach Anspruch 10, das ferner Folgendes umfasst
Senden der Benachrichtigung an das Dienstverbrauchernetzwerkelement oder die Dienstverbrauchernetzwerkfunktion gemäß den Benachrichtigungszieladressinformationen, die in der modifizierten Ereignisexpositionssubskription angezeigt sind und
Einbinden einer Anzeige des Ereignisses, das bestimmt wird, und der Benachrichtigungskorrelationsidentifikation, die der Ereignisexpositionssubskription zugeteilt ist, in die Benachrichtigung.

12. Zugangs- und Mobilitätsfunktionsentität (50), die Mittel zum Durchführen des Verfahrens von einem der Ansprüche 1 bis 8 umfasst.

13. Computerprogrammprodukt für eine Zugangs- und Mobilitätsfunktionsentität (50), das Softwarecodeabschnitte zum Durchführen der Schritte von einem der Ansprüche 1 bis 8 umfasst, wenn das Produkt auf einer Zugangs- und Mobilitätsfunktionsentität (50) läuft.

14. Basisstation (20), die Mittel zum Durchführen des Verfahrens von Anspruch 9 umfasst.

15. Computerprogrammprodukt für eine Basisstation (20), das Softwarecodeabschnitte zum Durchführen der Schritte von Anspruch 9 beinhaltet, wenn das Produkt auf der Basisstation läuft.

## Revendications

1. Procédé destiné à être utilisé dans une entité de fonction d'accès et de mobilité (50) contrôlant une communication d'au moins un équipement utilisateur (10) dans un réseau de communication via au moins une station de base, le procédé comprenant les étapes suivantes
recevoir (S310) et traiter un abonnement d'exposition d'événement pour des événements liés à l'au moins un équipement utilisateur, dans lequel l'abonnement d'exposition d'événement indique un identifiant permanent d'abonnement de l'au moins un équipement utilisateur,
déterminer (S320) la station de base (20) avec laquelle l'équipement utilisateur (10), déterminé au moyen de l'identifiant permanent d'abonnement dans l'abonnement d'exposition d'événement, a établi une connexion de communication,
en connexion avec la détermination de la station de base avec laquelle l'au moins un équipement utilisateur en question a établi une connexion de communication,
mapper l'identifiant permanent d'abonnement de l'au moins un équipement utilisateur indiqué dans l'abonnement d'exposition d'événement à une identification temporaire de l'au moins un équipement utilisateur utilisé sur une interface avec la station de base (20), et
transférer (S330) un abonnement d'exposition d'événement modifié pour des événements liés à l'au moins un équipement utilisateur (10) à l'au moins une station de base qui est déterminée pour l'au moins un équipement utilisateur, dans lequel l'abonnement d'exposition d'événement modifié indique l'identification temporaire de l'au moins un équipement utilisateur utilisé sur l'interface avec la station de base (20), et dans lequel l'abonnement d'exposition d'événement et l'abonnement d'exposition d'événement modifié comprennent une identification d'événement et des informations d'adresse cible de notification liées à un élément ou à une fonction de réseau de consommateur de services ayant initié l'abonnement d'exposition d'événement, ainsi qu'une identification de corrélation de notification allouée à l'abonnement d'exposition d'événement.

2. Procédé selon la revendication 1, comprenant en outre les étapes suivantes :
déterminer si l'au moins une station de base (20) est configurée pour observer les événements liés à l'au moins un équipement utilisateur (10), et
transférer l'abonnement d'exposition d'événement modifié à l'au moins une station de base dans le cas où la détermination est positive.

3. Procédé selon la revendication 1 ou 2, dans lequel les événements liés à l'au moins un équipement utilisateur (10) concernent au moins parmi
un changement d'emplacement de l'au moins un équipement utilisateur (10) dans le réseau de communication,
une situation où l'au moins un équipement utilisateur entre dans une zone d'intérêt prédéterminée définie dans le réseau de communication ou en sort, et
une situation où la connexion de communication avec l'au moins un équipement utilisateur est établie, perdue ou libérée.

4. Procédé selon l'une des revendications 1 à 3, comprenant en outre les étapes suivantes
dans le cas où l'abonnement d'exposition d'événement est lié à une pluralité d'équipements utilisateurs (10),
déterminer (S420, S430), pour chacun de la pluralité d'équipements utilisateurs (10), la station de base (20) correspondante avec laquelle chacun de la pluralité d'équipements utilisateurs (10) a établi une connexion de communication,
mapper chaque identifiant permanent d'abonnement de la pluralité d'équipements utilisateurs (10) indiqué dans l'abonnement d'exposition d'événement à une identification temporaire correspondante de la pluralité d'équipements utilisateurs (10) utilisés sur l'interface avec la station de base, et
transférer (S425, S435), à chacune des stations de base déterminées, un abonnement d'exposition d'événement modifié distinct pour des événements liés à l'équipement utilisateur (10) qui y est connecté.

5. Procédé selon la revendication 4, comprenant en outre les étapes suivantes
transférer, à un élément ou à une fonction de réseau de consommateur de services ayant initié l'abonnement d'exposition d'événement, des informations indiquant l'identification temporaire correspondante de la pluralité d'équipements utilisateurs (10) utilisés sur l'interface avec la station de base (20), qui est mappée à chaque identifiant permanent d'abonnement de la pluralité d'équipements utilisateurs (10) indiqué dans l'abonnement d'exposition d'événement, dans lequel les informations sont fournies dans un message de réponse à un message comportant l'abonnement d'exposition d'événement, ou sont fournies dans un message distinct à l'élément ou à la fonction de réseau de consommateur de services.

6. Procédé selon l'une des revendications 1 à 5, comprenant en outre l'étape suivante
lorsqu'il est déterminé que l'au moins un équipement utilisateur (10) a changé la connexion de communication pour une nouvelle station de base, envoyer l'abonnement d'exposition d'événement modifié pour des événements liés à l'au moins un équipement utilisateur (10) à la nouvelle station de base.

7. Procédé selon l'une des revendications 1 à 5, comprenant en outre l'étape suivante
lorsqu'il est déterminé que l'au moins un équipement utilisateur (10) a attribué une nouvelle identification temporaire utilisée sur l'interface avec la station de base, envoyer un nouvel abonnement d'exposition d'événement modifié pour des événements liés à l'au moins un équipement utilisateur (10) à l'au moins une station de base, dans lequel le nouvel abonnement d'exposition d'événement modifié indique la nouvelle identification temporaire.

8. Procédé selon la revendication 7, comprenant en outre l'étape suivante
transférer, à un élément ou à une fonction de réseau de consommateur de services ayant initié l'abonnement d'exposition d'événement, des informations indiquant la nouvelle identification temporaire utilisée sur l'interface avec l'au moins un équipement utilisateur (10), qui est mappée à l'identifiant permanent d'abonnement de l'au moins un équipement utilisateur (10) indiqué dans l'abonnement d'exposition d'événement et ayant attribué la nouvelle identification temporaire.

9. Procédé destiné à être utilisé dans une station de base (20) configuré pour effectuer une communication avec au moins un équipement utilisateur (10) dans un réseau de communication, le procédé comprenant les étapes suivantes
recevoir d'une entité de fonction d'accès et de mobilité (50) et traiter un abonnement d'exposition d'événement modifié pour des événements liés à l'au moins un équipement utilisateur (10), dans lequel l'abonnement d'exposition d'événement modifié comprend une identification d'événement et indique une identification temporaire de l'au moins un équipement utilisateur utilisé sur une interface avec la station de base, et dans lequel l'abonnement d'exposition d'événement modifié comprend des informations d'adresse cible de notification liées à l'élément ou à la fonction de réseau de consommateur de services ayant initié l'abonnement d'exposition d'événement, ainsi qu'une identification de corrélation de notification allouée à l'abonnement d'exposition d'événement,
déterminer si au moins l'un des événements identifiés dans l'abonnement d'exposition d'événement modifié se produit, et dans le cas où la détermination est positive,
envoyer à la station de base une notification indiquant qu'au moins un des événements identifiés dans l'abonnement d'exposition d'événement modifié s'est produit, directement à un élément ou à une fonction de réseau de consommateur de services ayant initié un abonnement d'exposition d'événement qui est différent.

10. Procédé selon la revendication 9, dans lequel les événements liés à l'au moins un équipement utilisateur concernent au moins au moins l'un parmi
un changement d'emplacement de l'au moins un équipement utilisateur dans le réseau de communication,
une situation où l'au moins un équipement utilisateur entre dans une zone d'intérêt prédéterminée définie dans le réseau de communication ou en sort, et
une situation où la connexion de communication avec l'au moins un équipement utilisateur est établie, perdue ou libérée.

11. Procédé selon la revendication 10, comprenant en outre les étapes suivantes
envoyer la notification à l'élément ou à la fonction de réseau de consommateur de services selon les informations d'adresse cible de notification indiquées dans l'abonnement d'exposition d'événement modifié et
inclure dans la notification une indication de l'événement déterminé et l'identification de corrélation de notification allouée à l'abonnement d'exposition d'événement.

12. Entité de fonction d'accès et de mobilité (50) comprenant des moyens pour réaliser le procédé de l'une des revendications 1 à 8.

13. Produit de programme informatique pour une entité de fonction d'accès et de mobilité (50), comportant des portions de code logiciel pour réaliser les étapes de l'une des revendications 1 à 8, lorsque ledit produit est exécuté sur l'entité de fonction d'accès et de mobilité (50).

14. Station de base (20) comprenant des moyens pour réaliser le procédé de la revendication 9.

15. Produit de programme informatique pour une station de base (20), comportant des portions de code logiciel pour réaliser les étapes de la revendication 9, lorsque ledit produit est exécuté sur la station de base.
